(19) **Europäisches Patentamt**
**European Patent Office**
**Office européen des brevets**

(11) **EP 4 712 016 A1**

(12) **EUROPEAN PATENT APPLICATION**

(43) Date of publication:
**18.03.2026 Bulletin 2026/12**

(51) International Patent Classification (IPC):
***G06T 3/40*** *(2024.01)*

(21) Application number: **25188640.4**

(22) Date of filing: **10.07.2025**

(52) Cooperative Patent Classification (CPC):
**G06T 3/4046**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **11.09.2024 US 202418882461**

(71) Applicant: **Intel Corporation**
**Santa Clara, CA 95054 (US)**

(72) Inventors:
- **POSSOS, Sebastian**
  **Sammamish, 98074 (US)**
- **LEE, Penne**
  **Bellevue, 98005 (US)**
- **CHIU, Yi-jen**
  **San Jose, 95129 (US)**
- **PALMER, Eric**
  **La Grange, 40031 (US)**

(74) Representative: **Goddar, Heinz J. et al**
**Boehmert & Boehmert**
**Anwaltspartnerschaft mbB**
**Pettenkoferstrasse 22**
**80336 München (DE)**

(54) **RESIZING FOR ENHANCED INFERENCE**

(57) The lack of knowledge about a downstream consumer using a resized image can lead to poor inference quality of a machine learning model. Inference quality can be improved when the resizing algorithm to produce resized images closely matches the one used during training of the machine learning model. To achieve this technical task, a resizer can be made aware of downstream consumer information and apply a suitable resizing algorithm. In one scenario, the downstream consumer information is received as metadata from a downstream process. In another scenario, an optimal resizing option can be determined to maximize inference quality. In yet another scenario, a likely resizing option can be determined by assessing a filtering profile determined based on a known original image and a known resized image.

FIG. 1

**Description**

Background

Video compression is a technique for making video files smaller and easier to transmit over the Internet. There are different methods and algorithms for video compression, with different performance and tradeoffs. Video compression involves encoding and decoding. Encoding is the process of transforming (uncompressed) video data into a compressed format. Decoding is the process of restoring video data from the compressed format. An encoder-decoder system is called a codec.

Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.

FIG. 1 illustrates a model training process and a model inferencing process, according to some embodiments of the disclosure.
FIG. 2 illustrates a resizer that is aware of downstream consumer information, according to some embodiments of the disclosure.
FIG. 3 depicts a flow diagram illustrating a method for determining a resizing option based on downstream consumer information, according to some embodiments of the disclosure.
FIG. 4 illustrates a model training process and a model inferencing process having a resizer optimizer according to some embodiments of the disclosure.
FIG. 5-6 depicts a flow diagram illustrating a method for determining an optimal resizing option, according to some embodiments of the disclosure.
FIG. 7 illustrates a model training process and a model inferencing process having a profiler according to some embodiments of the disclosure.
FIG. 8-9 depicts a flow diagram illustrating a method for determining a likely resizing option, according to some embodiments of the disclosure.
FIG. 10 depicts a block diagram of an exemplary computing device, according to some embodiments of the disclosure.

Detailed Description

*Overview*

Resizing (or rescaling) of an image is often performed for training and inferencing of machine learning models that take images or videos as input. There are a variety of resizing algorithms that are intended for different purposes and can achieve different results. There are also different types of downstream consumers with unique requirements for rescaling. For example, a resizing algorithm may be targeted for playback of content to be viewed by a user. In another example, a resizing algorithm may be targeted for video analysis and machine learning inference tasks. A downstream consumer may be used in a playback application. Playback applications may have requirements associated with human visual systems, where sharper foreground images with soft blurred background. Another downstream consumer may be used in machine learning inference tasks. Machine learning inference applications such as computer vision tasks, may achieve higher inference quality with images that have more defined edges and salient features.
The lack of knowledge about a downstream consumer using a resized image can lead to poor inference quality of a machine learning model. Many image processing pipelines do not make a connection between the downstream consumer and the upstream resizer (and/or decoder). A resizing algorithm targeted for playback may be used in an all-purpose manner, such as to prepare video frames for machine learning inference. An evaluation of different resizing algorithms reveals that the choice of resizing algorithm can significantly impact inference quality. In particular, using a resizer algorithm tuned to maximize visual quality (e.g., bilinear algorithm) for resizing input images to a machine learning model may lead to poor inference quality.
In some scenarios, performance of the downstream consumer may be improved when the upstream resizer is made context aware of the requirements of the downstream consumer. In some scenarios, inference quality can be improved when the resizing algorithm to produce resized images closely matches the one used during training of the machine learning model.
To achieve this technical task, a resizer can be made aware of downstream consumer information and apply a suitable resizing algorithm. The resizer can consider the downstream consumer information and adapts the resizing algorithm based on the downstream consumer information. Downstream consumer information can include one or more attributes, such as one or more consumer intents, one or more identifiers for a (preferred) resizing algorithm, one or more parameters for a resizing algorithm, and one or more orders of operations. The downstream consumer information can be embedded or built into the downstream consumer, such as a machine learning model. The embedded downstream consumer information can be offered upstream of the downstream consumer to better inform the resizer of the best resizer algorithm to apply and to use the best resizer parameters. Signaling the downstream consumer information to the upstream resizer means that the resizer can perform resizing to enable optimal quality and performance of the downstream consumer, such as to achieve optimal inference quality for a machine learning model.

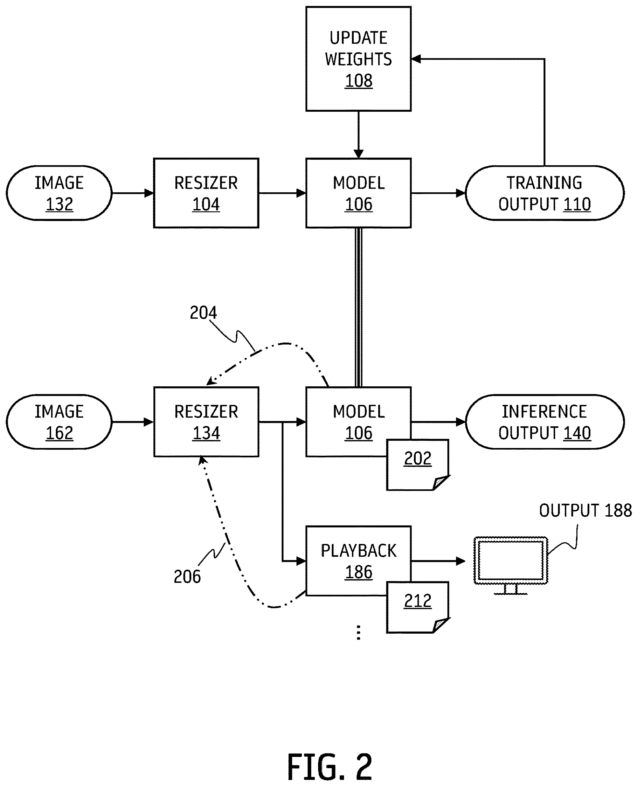

In one scenario, the downstream consumer information is received as metadata from a downstream process. The metadata having downstream consumer information can provide knowledge to the resizer. The knowledge can indicate whether to resize for visual quality, for inference, or for other intents. The knowledge can specify which resizer algorithm to use and with which parameters for the resizer algorithm (e.g., such as the resizer algorithm and one or more parameters for the resizer algorithm used in training a machine learning model). In some embodiments, the metadata can be embedded as a part of a machine learning model definition. Exemplary implementations involving metadata sharing are illustrated in FIGS. 2-3.

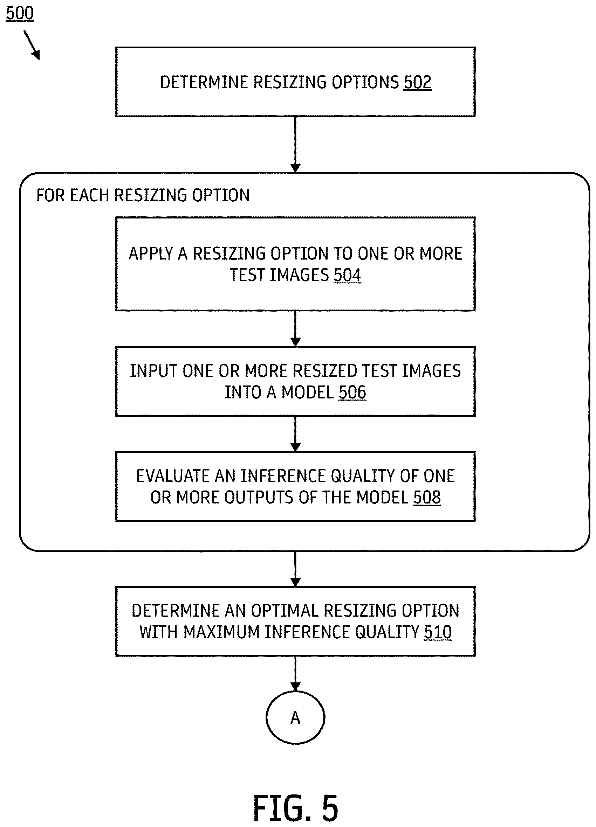

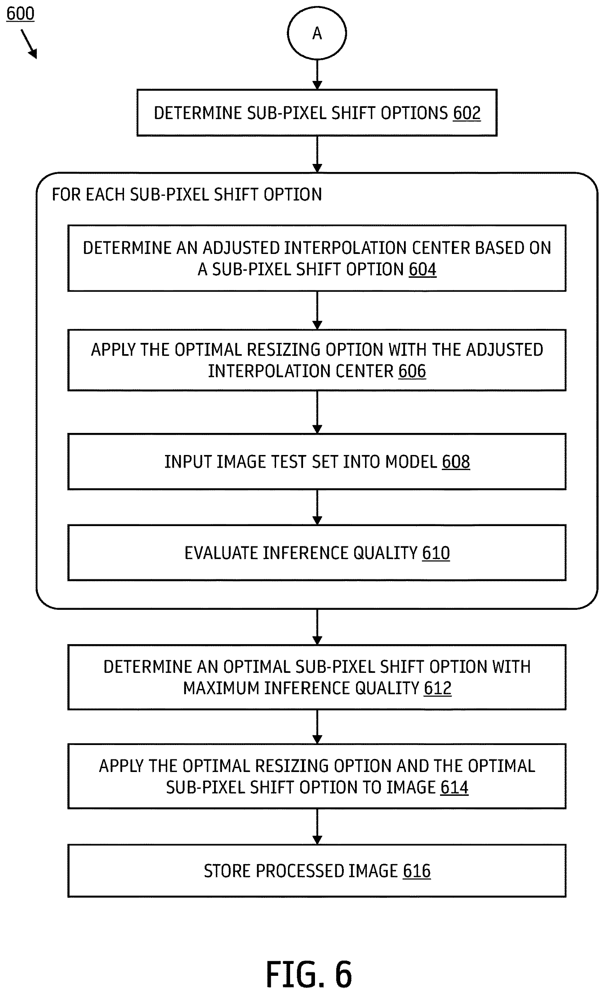

In another scenario, an optimal resizing option can be determined to maximize inference quality. When metadata is not available or known, different resizing options can be evaluated to determine the resizing option that yields the best performance for the downstream consumer, such as the maximum inference quality of a machine learning model. Exemplary implementations involving a resizer optimizer are illustrated in FIGS. 5-7.

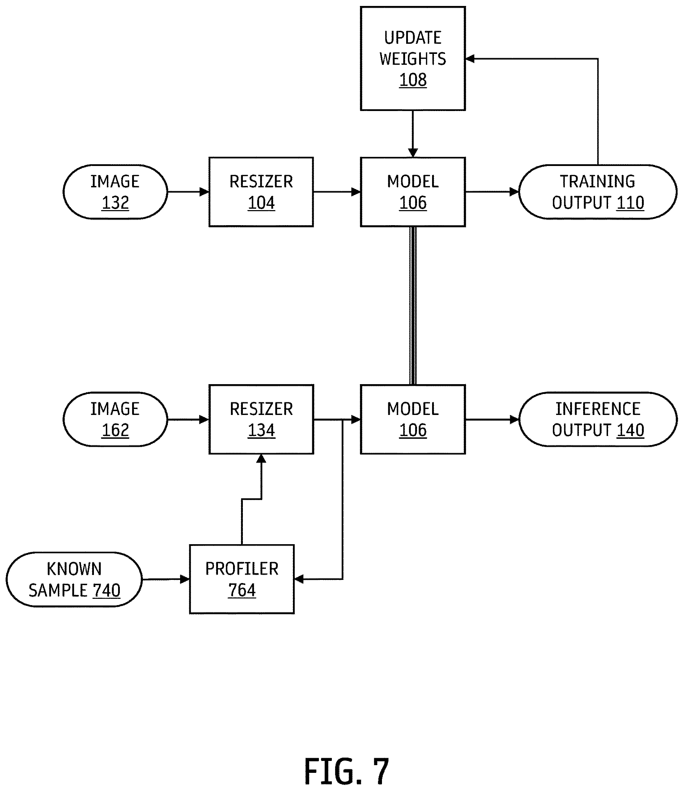

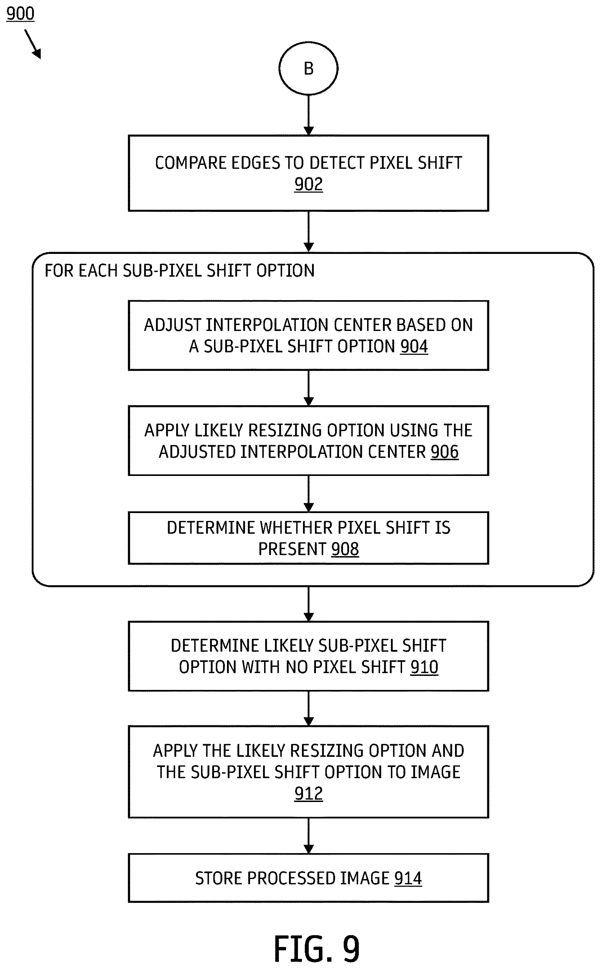

In yet another scenario, a likely resizing option can be determined by assessing a filtering profile determined based on a known original image and a known resized image. When metadata is not available or known, but a known sample having an original image and a resized image of the original image is available, a filter profile can be determined. The filter profile can be compared against known filter profiles of various resizing options to ascertain which resizing option is most likely. Exemplary implementations involving a profiler are illustrated in FIGS. 7-9.

Advantageously, some of the methods illustrated herein can be executed once per model, and the information can be reused for all subsequent resizing operations. It is possible that the resizing algorithm used for training a model is the same as the one used for inference. However, many models may be performing inference on the edge, and the chances that the resizing algorithm used for training differs from the resizing algorithm being used for inference. The problem of choosing a potentially mismatched resizing algorithm for inference is therefore real. The various solutions illustrated herein to address the problem are practical, scalable, and independent of where and how models are trained and used in inference.

*Technical problem associated with an uninformed resizer*

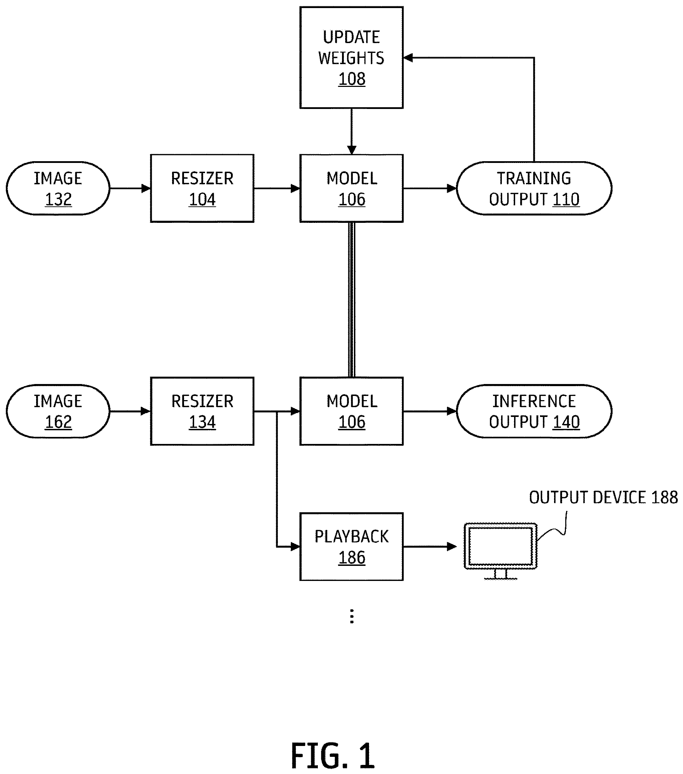

FIG. 1 illustrates a model training process and a model inferencing process, according to some embodiments of the disclosure.

In a model training process, one or more images 132 may be provided as input to resizer 104. The one or more images 132 may be part of one or more videos. Resizer 104 may implement a resizing algorithm, or a rescaling algorithm to produce one or more resized images. Resizer 104 can take one or more images 132 of one size and produce one or more resized images of a different size, either larger or smaller. Resizer 104 can implement a resizer algorithm by determining new pixel values for the resized image based on the original image.

Resizer 104 can adjust the image dimensions to fit specific requirements of a downstream consumer. Resizer 104 can maintain image quality and important visual features as much as possible. Resizer 104 can minimize artifacts like blurring, pixelation, or jagged edges. Resizer 104 can implement different algorithms use various mathematical techniques to determine how to calculate new pixel values for the resized image, balancing factors like speed, quality, and specific use cases.

In some cases, resizer 104 may be part of a decoder that is decoding an encoded bitstream. In some cases, resizer 104 may be downstream of a decoder. In some cases, resizer 104 may be downstream of a color conversion or transform process. In some cases, resizer 104 may be upstream of the color conversion or transform process. A color conversion or transform process can change the way color information is represented, e.g., by changing the color space or model used in representing color. Examples of conversions may include Red Green Blue (RGB) to Grayscale, RGB to Luminance and Chrominance (YUV).

One or more resized images produced by resizer 104 may be provided as input to model 106. Resizer 104 may be used because model 106 expects input images of a certain size. Resizer 104 may be used to limit the amount of input data that model 106 has to process. Resizer 104 may be used to limit the amount of memory usage for running model 106.

Model 106 may be a machine learning model, such as a deep learning model. An example of model 106 is a convolutional neural network (CNN) (or other suitable neural networks used for processing images). Model 106 may include layers such as convolutional layers, activation functions, pooling layers, fully connected layers, and SoftMax layers. Other examples of model 106 may include vision transformers, attention-based architectures, generative adversarial networks, autoencoders, encoder-decoder models, recurrent neural networks, ensemble models, temporal convolutional neural networks, graph-based neural networks, etc.

Model 106 may undergo the model training process to perform one or more inferencing tasks. Examples of inferencing tasks include: image classification, object detection, image segmentation, face recognition, image generation, style transfer, image restoration, inpainting, super-resolution, image compression, optical character recognition, spatial model reconstruction, image registration/alignment, image compression, feature extraction, image captioning, and image coloration.

As part of the model training process, one or more resized images produced from training data by resizer 104 may be provided as input into model 106 to carry out forward propagation. Model 106 may produce one or more training outputs 110 in response to receiving the one or more resized images. Update weights 108 may perform loss calculation by comparing one or more training outputs 110 to ground truth of the training data. Update weights 108 may perform backpropagation by computing gradients of the loss with respect to parameters in model 106. Update weights 108 may update one or more parameters (such as weights and biases) in model 106 according to an optimization algorithm, such as stochastic gradient descent.

In an inferencing process, one or more images 162 may be provided as input to resizer 134. Resizer 134 may produce one or more resized images. In some cases, resizer 134 may be part of a decoder that is decoding an encoded bitstream. In some cases, resizer 134 may be downstream of a decoder. In some cases, resizer 134 may be downstream of a color conversion or transform process. In some cases, resizer 134 may be upstream of the color conversion or transform process.

The one or more resized images may be input into (trained) model 106. In response to receiving the one or more resized images, model 106 may perform one or more inferencing tasks to generate one or more inference outputs 140. Model 106 may be a downstream consumer that is downstream of resizer 134.

In some scenarios, the system that is running model 106 for inferencing may include one or more other downstream consumers. In other words, the system may have several downstream consumers that is downstream of resizer 134. Playback 186 may be an example of a downstream consumer of resizer 134. Playback 186 may process the one or more resized images from resizer 134 for rendering or output on output device 188. Other examples of a downstream consumer may include video editing application, video or image previewer application, video or image creator application, signal processing application, transcoding application, video analytics application, video summarization, video segmentation, video action segmentation, scene change detection, people counting, and surveillance application.

Referring back to the inferencing process involving resizer 134 and model 106, an engineer implementing the inferencing process may consider using a resizing algorithm that achieves the highest visual quality. In some cases, an engineer implementing the inferencing process may consider using an available resizing algorithm on the system, such as a resizing algorithm that is a part of the software libraries for playback 186.

Results of an evaluation of different resizing algorithms reveal that using the resizing algorithm that achieves the highest visual quality may not necessarily achieve the best inference quality. Instead, results reveal that using the resizing algorithm that matches the resizing algorithm used in the model training process can positively influence the inference quality. The evaluation included running different resizing algorithms on a validation dataset and inference quality corresponding to the different resizing algorithms were examined. The validation dataset used includes a Common Objects in Context (COCO) dataset that has many labeled objects in photos. The model used is the Computer Vision Annotation Tool (CVAT), which supports object detection, image classification, and image segmentation. Bilinear Variant 1 was used as the resizing algorithm to resize images during the model training process. The following table summarizes the results:

| Resizing algorithm | Mean annotation quality | Precision | Recall | Error | Warning | Total conflicts |
|---|---|---|---|---|---|---|
| Bilinear Variant 1 (exactly the same as training) | 99.99% | 99.99% | 99.99% | 0 | 36 | 36 |
| Bilinear Variant 2 | 97.60% | 98.30% | 99.20% | 8 | 32 | 40 |
| Bilinear Variant 3 | 94.50% | 96.40% | 98.00% | 37 | 63 | 100 |
| Lanczos Variant 1 | 91.80% | 95.90% | 95.50% | 55 | 51 | 106 |
| Lanczos Variant 2 | 89.00% | 94.10% | 94.30% | 74 | 71 | 145 |

(continued)

| Resizing algorithm | Mean annotation quality | Precision | Recall | Error | Warning | Total conflicts |
|---|---|---|---|---|---|---|
| Resizing algorithm from NVIDIA Data Loading Library (DALI) | 87.50% | 96.00% | 90.80% | 86 | 70 | 156 |
| Nearest Neighbor Variant 1 | 86.60% | 92.00% | 93.70% | 90 | 101 | 191 |

As seen in the table above, when using the exact same resizing algorithm as the one used in the model training process, the inference quality, such as mean annotation quality is the highest. The degree of degradation associated with using other resizing algorithms was surprisingly large (e.g., up to 13.4% quality drop) and suggests that resizing algorithm matching and consistency with the one used in the model training process can significantly impact inference quality.

*Technical solution: making the resizer aware of downstream consumer information*

FIG. 2 illustrates a resizer that is aware of downstream consumer information, according to some embodiments of the disclosure. Resizer 134 can be context aware so that resizer 134 can have knowledge of the downstream consumer so that resizer 134 can adapt to the downstream consumer information. A signaling path 204 may be implemented to allow model 106 to communicate downstream consumer information 202 to resizer 134. A signaling path 206 may be implemented to allow a downstream consumer, such as playback 186, to communicate downstream consumer information 212 to resizer 134.

Resizer 134 (or a decoder, or pre-processor) can receive downstream consumer information from a downstream process, such as model 106 and playback 186 (or other suitable downstream processes illustrated in FIG. 1).

Downstream consumer information can convey information such as intended usage or specify the resizing algorithm to use. The following illustrates some examples of data in the downstream consumer information:

```
enum consumerIntent
 {
        unknown,
        inference,
        playback,
        transcoding
 } ;

 enum resizerAlgorithm
 {
        bilinear,
        bilinearNyquist,
        nearestNeighbor,
        bicubic,
        lanczos,
 } ;

 enum resizerGoal
 {
        maxVisualQuality,
        maxPerformance,
        maxFeatures,
        maxEdges
 } ;

 enum rangeInformation
 {
        fullRange, //0-256
        limitedRange //16-39
 } ;

 enum colorSpace
 {
        RGB,
        YUV,
        LumaOnly,
```

```
            ChromaOnly
    } ;


    enum precision
    {
            INT8,
            FP16,
            FP32,
            FP64
    } ;


    enum pipelineOrder
    {
            resizeFirstThenConversion,
            conversionFirstThenResize
    } ;


    subPixelInterpolationCenterOffset:
            XOffset, //signed number of 1/32th pixel increments
            YOffset //signed number of 1/32th pixel increments


    int[] filterTaps //array of filter taps for 1D filter
    int[] [] 2DFilterTaps //2D array of filter taps for 2D filter
```

In some embodiments, the downstream consumer information comprises a consumer intent. "consumerIntent" is an illustrative example of consumer intent. "consumerIntent" can indicate a selected one of the enumerated examples of consumer intents.

In some embodiments, the downstream consumer information comprises an identifier for a resizing algorithm. "resizerAlgorithm" is an illustrative example of an identifier for a resizing algorithm. "resizerAlgorithm" can indicate a selected one of the enumerated examples of resizing algorithms. Different resizing algorithms may include: bilinear, bilinear Nyquist, nearest neighbor, bicubic, Lanczos, gaussian, average area, Gaussian, Sinc, spline, Fourier-based, edge-directed, pixel art scaling, image tracing, neural network based, box sampling, Mitchell-Netravali, super-sampling, sub-sampling, and seam carving.

In some embodiments, the downstream consumer information comprises information associated with the resizing algorithm. Information associated with the resizing algorithm can include one or more parameters for the resizing algorithm. Information associated with the resizing algorithm can include an order of operations. Illustrative examples of the information includes, "resizerGoal", "rangeInformation", "colorSpace", "precision", "pipelineOrder", "subPixelInterpolationCenterOffset", "filterTaps", and "2DFilterTaps". "resizerGoal" can indicate a selected one of the enumerated goals or metrics a resizer algorithm should target. "rangeInformation" can indicate whether full range or limited range pixel data is to be used by the downstream consumer. "colorSpace" can indicate a selected one of the enumerated color spaces that the downstream consumer uses. "precision" can indicate a selected one of the precisions that the downstream consumer uses. "pipelineOrder" can indicate whether the downstream consumer expects conversion to occur before resizing or resizing to occur before conversion. "subPixelInterpolationCenterOffset" can specify a sub-pixel shift to be applied to an interpolation center. The sub-pixel shift can be defined in the x-direction and the y-direction. The sub-pixel shift can be defined based on a number of 1/32 pixel increments to be applied. "filterTaps", and "2DFilterTaps" can specify filter coefficients for the filter to be applied for the resizing algorithm.

Resizer 134 may determine a resizing option based on downstream consumer information. The resizing option may be determined to match or correspond to downstream consumer information as much as possible. In some cases, resizer 134 may be configurable to carry out a resizing algorithm in a manner specified by the downstream consumer information. In some cases, resizer 134 may be configurable to carry out a resizing algorithm that matches or corresponds as much as possible to the downstream consumer information. Resizer 134 may not be infinitely resizable, and resizer 134 may determine a resizing option that is not exactly the same but matches/corresponds to the downstream consumer information as closely as possible.

Resizer 134 may apply the resizing option to an image, e.g., one or more images 162, to generate a processed image such as one or more resized images. Resizer 134 may store the processed image or provide the processed image to the downstream process. The processed image is to be processed by the downstream process. For example, model 106 may perform an inference task on the processed image. In another example, playback 186 may render or output the processed image.

In some embodiments, downstream consumer information 202 may be embedded as part of a model definition of model 106. Model files that make up the model definition can include metadata that includes downstream consumer information 202 as described herein. The metadata can include information about model inputs and outputs such as image format. The metadata can include downstream consumer information 202, which can provide information about the resizing algorithm to use. Resizer 134 may obtain the downstream consumer information 202 from the model definition of model 106.

In some embodiments, downstream consumer information 212 retrievable from a downstream process such as playback 186 via an application programming interface (API). Resizer 134 may obtain the downstream consumer information 212 from playback 186 by making an API function call to request downstream consumer information 212. Playback 186 may transmit downstream consumer information 212 in response to the API function call to resizer 134.

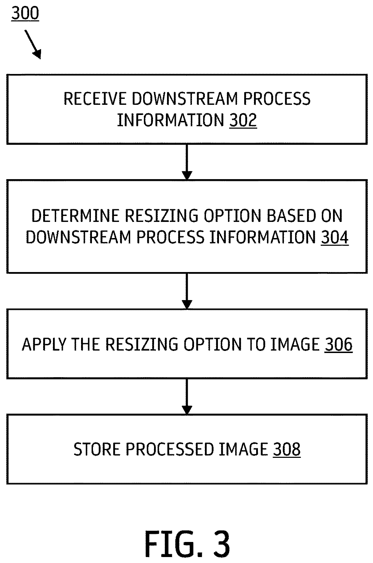

FIG. 3 depicts a flow diagram illustrating method 300 for determining a resizing option based on downstream consumer information, according to some embodiments of the disclosure. Method 300 may be carried out by resizer 134 or a component that is able to configure resizer 134. In 302, downstream consumer information is received from a downstream process. In 304, a sizing option is determined based on downstream consumer information. In 306, the resizing option is applied to an image to generate a processed image. In 308, the processed image is stored, e.g., in non-transitory computer-readable storage. The processed image is to be processed by the downstream process.

*Summaries of various resizing algorithms*

- Bilinear: Uses linear interpolation in both dimensions (e.g., in a 2x2 pixel neighborhood).
- Bilinear Nyquist: Similar to bilinear, but with additional filtering to prevent aliasing.
- Nearest Neighbor: Simple and fast. Selects the closest pixel value. Produces blocky, pixelated results without smoothing. Can result in a blocky appearance.
- Bicubic: Uses cubic interpolation in both dimensions (e.g., over a 4x4 pixel neighborhood), generally producing smoother results with better edge preservation, though ringing artifacts may be introduced.
- Lanczos: Employs a windowed Sinc function for high-quality downscaling that maintains details and sharp edges, but can cause ringing.
- Gaussian: Applies a Gaussian function for smooth interpolation.
- Average Area: Averages pixel values in the source area corresponding to each destination pixel.
- Sinc: Uses the Sinc function for interpolation.
- Spline: Utilizes polynomial spline functions for smooth interpolation.
- Fourier-based: Operates in the frequency domain, allowing for precise control over frequency components.
- Edge-directed: Adapts interpolation based on edge detection to preserve sharpness.
- Pixel art scaling: Specialized algorithms for scaling pixel art while preserving its distinct style.
- Image tracing: Converts raster images to vector graphics before scaling.
- Neural network based: Uses machine learning models to intelligently upscale images.
- Box sampling: Averaging of source pixels within a box region.
- Mitchell-Netravali: A cubic filter designed to balance between sharpness and ringing artifacts.
- Super-sampling: Creates a higher resolution image and then downscales to reduce aliasing.
- Sub-sampling: Reduces image size by selecting a subset of pixels.
- Seam carving: Content-aware resizing that removes or duplicates paths of pixels (seams) based on importance.

*Technical solution: optimizing the resizer for maximum quality*

In some cases, downstream consumer information is not readily available to the resizer. When the downstream consumer information is not readily available, inference quality can be used as a proxy for finding the optimal resizing option to carry out in the resizer.

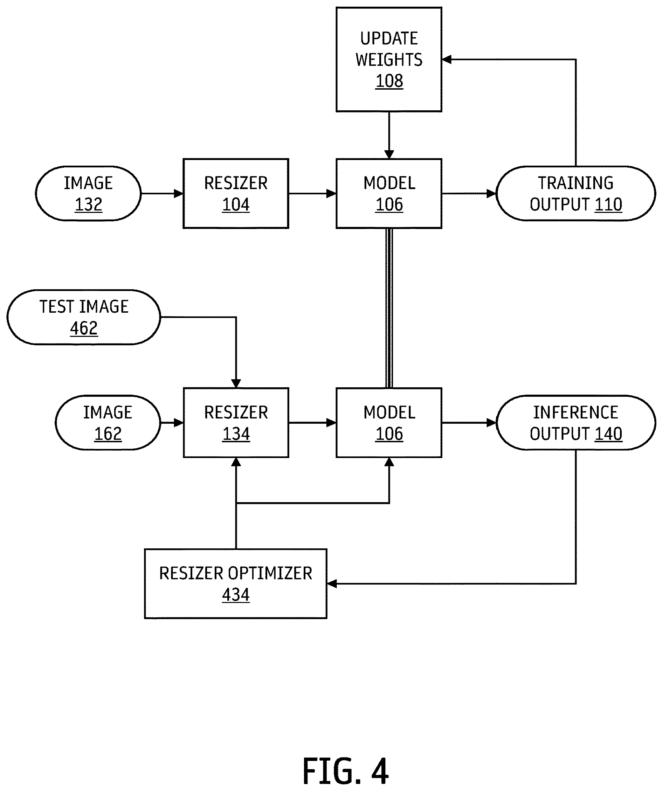

FIG. 4 illustrates a model training process and a model inferencing process having resizer optimizer 434 according to some embodiments of the disclosure. Resizer optimizer 434 may be tasked to find an optimal resizing option out of one or more resizing options that achieves the maximum, optimal, or best inference quality. A resizing option may refer to a type of resizing algorithm, or a type of resizing algorithm having one or more specific parameters or configurations. In some embodiments, resizer optimizer 434 may be tasked to determine an optimal sub-pixel shift option out of one or more sub-pixel shift options that achieves the maximum, optimal, or best inference quality.

Resizer optimizer 434 may be included to cause resizer 134 to carry out one or more resizing options. Resizer optimizer 434 may determine one or more test images 462 suitable for inference quality evaluation. In some cases, one or more test images 462 may originate from a pre-determined test data set. In some cases, one or more test images 462 may represent the images that model 106 is expected to process to perform the inference task.

For a particular resizing option, resizer optimizer 434 may cause resizer 134 to resize one or more test images 462 and generate one or more resized test images. Resizer optimizer 434 may trigger model 106 to perform one or more inferencing tasks based on one or more resized test images. Resizer optimizer 434 may examine one or more inference outputs 140 to evaluate inference quality associated with the particular resizing option. One or more resizing options may be evaluated in the same manner by resizer optimizer 434. The resizing option that achieves the best inference quality may be selected by resizer optimizer 434 and enabled in resizer 134.

FIG. 5-6 depicts a flow diagram illustrating a method (having method 500 and method 600) for determining an optimal resizing option, according to some embodiments of the disclosure. The method may be carried out by resizer optimizer 434 and/or resizer 134.

In 502, one or more resizing options may be identified or determined. Identification of resizing options may include selecting one or more resizing algorithms, and, optionally, different parameters or configurations supported by resizer 134. The one or more resizing options can include one or more resizing algorithms selected from: bilinear, bilinear Nyquist, nearest neighbor, bicubic, Lanczos, gaussian, average area, Gaussian, Sinc, spline, Fourier-based, edge-directed, pixel art scaling, image tracing, neural network based, box sampling, Mitchell-Netravali, super-sampling, sub-sampling, and seam carving.

504, 506, and 508 may be performed for each resizing option determined in 502.

For a resizing option in the one or more resizing options, in 504, the resizing option is applied to one or more test images to generate one or more resized test images.

For the resizing option in the one or more resizing options, in 506, the one or more resized test images may be input into a model, and the model may produce one or more outputs.

For the resizing option in the one or more resizing options, in 508, an inference quality of one or more outputs of the model may be evaluated. In some embodiments, the inference quality can depend on the inference task being performed by the model. Inference quality may include one or more of: accuracy metric, precision metric, recall metric, mean squared error, root mean squared error, mean absolute error, and R-squared error.

In 510, an optimal resizing option is determined based on the inference quality. For example, the optimal resizing option may have a maximum, optimal, or highest inference quality. In another example, the optimal resizing option can be determined by comparing its inference quality with that of other resizing options identified in 502. The resizing option with the highest inference quality among the various resizing options is selected as the optimal resizing option. In yet another example, the optimal resizing option may be determined by determining whether the inference quality for the resizing option is greater than one or more (other) determined inference qualities calculated for the one or more other resizing options of the resizing options determined in 502.

In some scenarios, one or more parameters/configurations of the optimal resizing option may be evaluated to determine one or more optimal parameters/configurations to use with the optimal resizing option. One example of a parameter/configuration is the location of an interpolation center. More specifically, the parameter/configuration may specify a sub-pixel shift amount in the x-direction and in the y-direction. In some cases, the sub-pixel shift amount may be specified from -1 to +1 in pre-determined sub-pixel increments (e.g., 1/32 pixel increments). In some cases, the sub-pixel shift amount may be specified from -1 to +1 in according to 1 divided by powers of two (e.g., $\frac{1}{2n}$). One or more sub-pixel shift options may be determined. Determining the one or more sub-pixel shift options may include determining one or more sub-pixel shift options that are supported by resizer 134 and associated with the optimal resizing option. In some embodiments, the one or more sub-pixel shift options are determined by determining one or more first sub-pixel shifts in a first direction according to pre-determined sub-pixel increments, determining one or more second sub-pixel shifts in a second direction according to pre-determined sub-pixel increments, and determining one or more pairwise combinations of the one or more first sub-pixel shifts and the one or more second sub-pixel shifts.

604, 606, 608, and 620 may be performed for each sub-pixel shift option determined in 602.

For a sub-pixel shift option in the one or more sub-pixel shift options, in 604, an adjusted interpolation center is determined based on the sub-pixel shift option.

For the sub-pixel shift option in the one or more sub-pixel shift options, in 606, the optimal resizing option using the adjusted interpolation center is applied to the one or more test images to generate one or more further resized test images.

For the sub-pixel shift option in the one or more sub-pixel shift options, in 608, the one or more further resized test images may be input into a model, and the model may produce one or more further outputs.

For the sub-pixel shift option in the one or more sub-pixel shift options, in 610, a further inference quality of the one or more further outputs of the model may be evaluated. In some embodiments, the further inference quality can depend on the inference task being performed by the model. The further inference quality may include one or more of: accuracy metric, precision metric, recall metric, mean squared error, root mean squared error, mean absolute error, and R-squared error.

In 612, an optimal sub-pixel shift option is determined based on the further inference quality. For example, the optimal sub-pixel shift option may have a maximum, optimal, or highest further inference quality. In another example, the optimal sub-pixel shift option may be determined by determining whether the further inference quality for the sub-pixel shift option is greater than one or more (other) determined further inference qualities calculated for the one or more other sub-pixel shift options of the sub-pixel shift options determined in 602.

In 614, the optimal resizing option using the optimal sub-pixel shift option may be applied to an image to generate a processed image. In 616, the processed image may be stored, e.g., in non-transitory computer-readable storage. The processed image is to be processed by the model.

*Technical solution: making an informed guess for the resizer algorithm*

In some cases, downstream consumer information is not readily available to the resizer. However, for some models, a known sample having one or more original images and one or more resized images may be available. Based on the known sample, it is possible to extract a filter profile of the unknown resizing algorithm used to produce the resized images of the known sample. Different resizing algorithms have been profiled and analyzed, where reference filtering profiles for the different resizing algorithms have been pre-determined. A reference filter profile associated with a particular resizing algorithm includes characteristics of images produced using the particular resizing algorithm. Characteristics can include one or more of: frequency response, ringing level, and blockiness level. The frequency response characteristic of a reference filter profile indicates or describes how well the resizing algorithm preserves high-frequency details (e.g., sharpness) of the image during resizing. A filter with a good frequency response retains more detail and sharpness. The ringing level characteristic of a reference filter profile refers to the amount or extent of oscillations near sharp transitions (e.g., edges) in an image, often appearing as halos or ripples. A resizing algorithm with a high ringing level can introduce noticeable artifacts around edges. The blockiness level characteristic of a reference filter profile refers to the amount or extent of visible block structures in the image, often due to low resolution or poor interpolation. High blockiness level indicates more noticeable block artifacts.

The following is a summary table that shows different reference filter profiles determined for different resizing algorithms.

| Resizing Algorithm | Frequency Response | Ringing Level | Blockiness Level |
|---|---|---|---|
| **Nearest Neighbor** | Poor | None | High |
| **Bilinear** | Moderate | None | Moderate |
| **Bilinear Nyquist** | Variable | None | Low to Moderate |
| **Lanczos** | Excellent | Moderate to High | Low |
| **Bicubic** | Good | Moderate | Low |

The following is a detailed table that explains the different reference filter profiles determined for different resizing algorithms.

| Resizing Algorithm | Frequency Response | Ringing Level | Blockiness Level |
|---|---|---|---|
| **Nearest Neighbor** | Poor. It retains the original pixel values, resulting in a very jagged and pixelated look for scaled images. | None. Since it does not perform any smoothing, there are no ringing artifacts. | High. The blocky artifacts are very pronounced due to the lack of interpolation. |
| **Bilinear** | Moderate. It performs a linear interpolation which smooths the image but does not retain high-frequency details well. | None. The linear interpolation does not introduce ringing artifacts. | Moderate. It reduces blockiness compared to Nearest Neighbor but can still be noticeable in lower resolutions. |
| **Bilinear Nyquist** | Variable. The adaptive nature can provide better frequency response based on the scaling factor, leading to better retention of details in some cases. | None. The interpolation remains linear, avoiding ringing artifacts. | Low to Moderate. Improved over standard Bilinear due to adaptive tabbing, which reduces blockiness further. |

(continued)

| Resizing Algorithm | Frequency Response | Ringing Level | Blockiness Level |
|---|---|---|---|
| Lanczos | Excellent. It uses a sinc-based interpolation which retains high-frequency details very well. | Moderate to High. The sinc function can introduce noticeable ringing artifacts, especially around sharp edges. | Low. It provides a very smooth interpolation, reducing blockiness effectively. |
| Bicubic | Good. It uses cubic interpolation which balances between detail preservation and smoothness. | Moderate. While it can introduce some ringing artifacts, they are generally less pronounced than those from Lanczos. | Low. Bicubic interpolation provides smooth transitions, reducing blockiness effectively. |

The procedure to extract a filter profile based on a known sample is not trivial. The known sample is processed to extract observable image characteristics to form the filter profile. Also, the reference filter profiles have been pre-determined through extensive research and analysis. Based on the extracted filter profile and the reference filter profiles, an educated guess can be made to find a likely resizing option that was used to produce the resized images in the known sample, or a likely resizing option that best matches the resizing algorithm used to produce the resized images in the known sample.

FIG. 7 illustrates a model training process and a model inferencing process having profiler 764 according to some embodiments of the disclosure. Profiler 74 may determine a filtering profile based on known sample 740 associated with model 106 (or a different downstream process). Known sample 740 may include one or more original images and one or more resized images of the one or more original images. Unfortunately, the resizing algorithm and optionally one or more parameters/configurations associated with the resizing algorithm (or the downstream consumer information) are unknown or incomplete. Profiler 764 may be tasked to find a likely resizing option out of one or more resizing options that matches the filtering profile extracted from known sample 740. A resizing option may refer to a type of resizing algorithm, or a type of resizing algorithm having one or more specific parameters or configurations. In some embodiments, profiler 764 may apply the likely resizing option to validate whether the educated guess is correct or not. In some embodiments, profiler 764 may be tasked to determine an optimal sub-pixel shift option out of one or more sub-pixel shift options that results in little to no pixel shift between a resized image of the known sample, and a resized image generated using the likely resizing option with the optimal sub-pixel shift option.

Profiler 764 may cause one or more images 132 to apply the likely resizing option for the validation procedure and assess structural similarity between a resized image of the known sample and a resized image generated using the likely resizing option.

Profiler 764 may cause one or more images 132 to apply the likely resizing option with different sub-pixel shift options and determine whether a pixel shift between a resized image of the known sample and a resized image generated using a particular sub-pixel shift option is present.

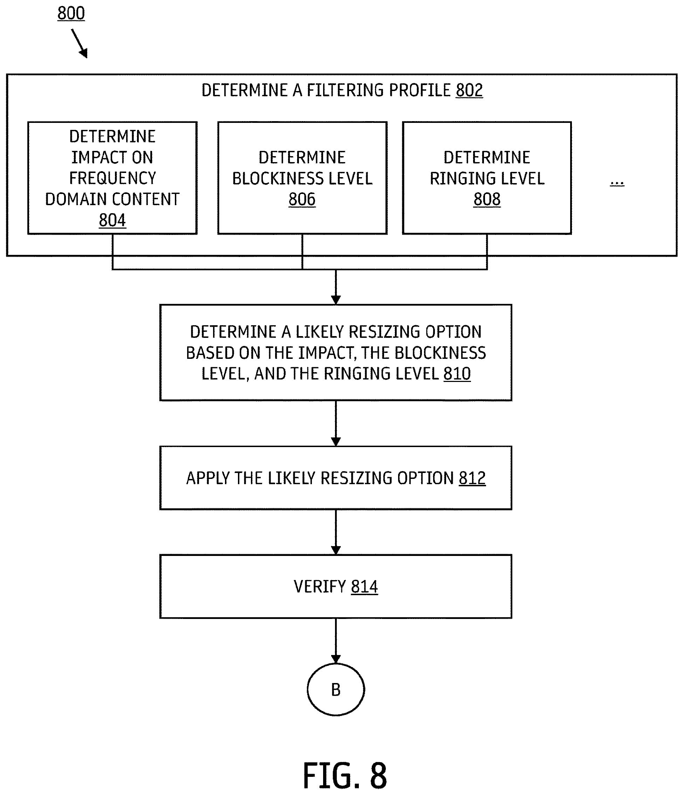

FIG. 8-9 depicts a flow diagram illustrating a method (having method 800 and 900) for determining a likely resizing option, according to some embodiments of the disclosure. The method may be carried out by profiler 764 and/or resizer 134.

While not shown in FIGS. 8-9, in some embodiments, the analysis being performed to extract the filter profile may operate on the Y (luminance) channel of the known sample only. If the known sample is based on a particular color space, the analysis may include converting the known sample (an original image and a resized image of the original image) to YUV color space. The Y channel data is used in the analysis.

In 802, a filtering profile may be determined based on an original image and a resized image generated by a model, such as an original image and a resized image of a known sample.

In 804 of 802, an impact on frequency domain content may be determined based on a first frequency domain information of the original image and a second frequency domain information of the resized image. In particular, the first frequency domain information (e.g., a first frequency domain spectrum of the original image) and the second frequency domain information (e.g., a second frequency domain spectrum of the resized image) may be compared to assess whether high-frequency content has been preserved or lost. In some embodiments, the impact quantifies or measures a loss or preservation of frequency domain content, such as high-frequency content.

In 806 of 802, a blockiness level may be determined based on the resized image. The amount of blockiness in the resized image may be measured. In some embodiments, Sobel edge detection may be performed on the resized image to determine one or more edges in the resized image, and the blockiness level can be determined based on the one or more edges.

In 808 of 802, a ringing level may be determined based on the resized image. The amount of ringing in the resized image may be measured. In some embodiments, Canny edge detection may be performed on the resized image to determine one or more further edges in the resized image. One or more variances can be calculated near the one or more further edges, and the ringing level may be determined based on the one or more variances.

In 810, a likely resizing option can be determined based on the filtering profile and a plurality of reference filtering profiles of a plurality of resizing options. The likely resizing option can be determined by finding the reference filtering profile that best matches the filtering profile and determining which resizing option corresponds to the reference filtering profile that best matched the filtering profile. In some cases, a matching score may be calculated that measures the level of match between the filtering profile and a given reference filtering profile, and the reference filtering profile that has the highest matching score may be the reference filtering profile that best matches the filtering profile. In some cases, a logic tree may be applied to determine whether the filtering profile matches a given reference filtering profile.

In 812, the likely resizing option may be applied to the original image to generate a further resized image. In 814, the likely resizing option can be validated, verified, or sanity-checked based on the resized image and the further resized image (produced using the likely resizing option). In some embodiments, the validation may include calculating a structural similarity index (SSIM) between the resized image and the further resized image. In some embodiments, the validation may include calculating mean squared error between the resized image and the further resized image. In some embodiments, the validation may include calculating a peak signal to noise ratio between the resized image and the further resized image. In some embodiments, the verification may include calculating one or more of: SSIM, mean squared error, and peak signal to noise ratio and determining a composite similarity score between the resized image and the further resized image. The SSIM (or another suitable similarity score or a composite similarity score) may be compared against a threshold to validate whether the likely resizing option was a good guess.

SSIM can measure differences in perceived structural information. SSIM compares local patterns of pixel intensities that have been normalized for luminance and contrast. SSIM index can be calculated for two windows x and y of common size $N \times N$, where window x is of the resized image, and window y is of the further resized image. The mathematical formulation for SSIM for x and y is as follows:

$$SSIM(x,y) = (2\mu_x\mu_y + c1)(2\sigma_{xy} + c2) \, / \, ((\mu_x^2 + \mu_y^2 + c1)(\sigma_x^2 + \sigma_y^2 + c2))$$

$\mu_x$ is the average of x. $\mu_y$ is the average of y. $\sigma_x^2$ is the variance of x. $\sigma_y^2$ is the variance of y. and $\sigma_{xy}$ is the covariance of x and y. c1, c2 are variables to stabilize the division with weak denominator.

In 902, edges of the resized image and the further resized image generated using the (validated) likely resizing option are compared to determine whether there is a pixel shift, or whether a pixel shift is present. In some cases, the direction and/or extent of the pixel shift may be determined. In some embodiments, a pixel shift may be determined by performing Canny edge detection on the resized image to determine one or more edges in the resized image, applying the likely resizing option to the original image to generate a further resized image, performing Canny edge detection on the further resized image to determine one or more further edges in the further resized image, and detecting a pixel shift between the resized image and the further resized image based on the one or more edges and the one or more further edges.

If pixel shift is detected, method 900 may proceed to evaluate different sub-pixel shift options relating to the location of an interpolation center. Different sub-pixel shift options may specify different sub-pixel shift amounts in the x-direction and in the y-direction. In some cases, the sub-pixel shift amount may be specified from -1 to +1 in pre-determined sub-pixel increments (e.g., 1/32 pixel increments). In some cases, the sub-pixel shift amount may be specified from -1 to +1 in according to 1 divided by powers of two (e.g., $\frac{1}{2n}$). Method 900 may include determining one or more sub-pixel shift options, in response to detecting a pixel shift in 902. Determining the one or more sub-pixel shift options may include determining one or more sub-pixel shift options that are supported by resizer 134 and associated with the likely resizing option. Determining the one or more sub-pixel shift options may include determining one or more sub-pixel shift options based on the detected pixel shift in 902. In some embodiments, the one or more sub-pixel shift options are determined by determining one or more first sub-pixel shifts in a first direction according to pre-determined sub-pixel increments, determining one or more second sub-pixel shifts in a second direction according to pre-determined sub-pixel increments, and determining one or more pairwise combinations of the one or more first sub-pixel shifts and the one or more second sub-pixel shifts.

904, 906, and 906 may be performed for each sub-pixel shift option.

For a sub-pixel shift option in the one or more sub-pixel shift options, in 904, an adjusted interpolation center is determined based on the sub-pixel shift option.

For the sub-pixel shift option in the one or more sub-pixel shift options, in 906, the likely resizing option using the adjusted interpolation center is applied to the original image to generate a shifted resized image.

For the sub-pixel shift option in the one or more sub-pixel shift options, in 908, whether a pixel shift between the shifted resized image and the resized image is present is evaluated. Whether a pixel shift is present or not is determined.

In 910, a likely sub-pixel shift option may be determined based on whether the pixel shift is not present. For example, the likely sub-pixel shift option may have a minimum, smallest, or lowest amount of pixel shift between the shifted resized image and the resized image. In another example, the likely sub-pixel shift option may be determined by determining whether the pixel shift is smaller than one or more further evaluated pixels shifts calculated for one or more other sub-pixel shift options in the one or more sub-pixel shift options. In another example, the likely sub-pixel shift option may be determined by determining whether the pixel shift is the smallest pixel shift out of the various pixels shifts calculated for the various sub-pixel shift options.

In 912, the likely resizing option is applied to an image to generate a processed image. In some cases, the likely sub-pixel shift option is applied to adjust an interpolation center used for the likely resizing option to generate the processed image. In 914, the processed image may be stored, e.g., in non-transitory computer-readable storage. The processed image is to be processed by the model.

## _Exemplary computing device_

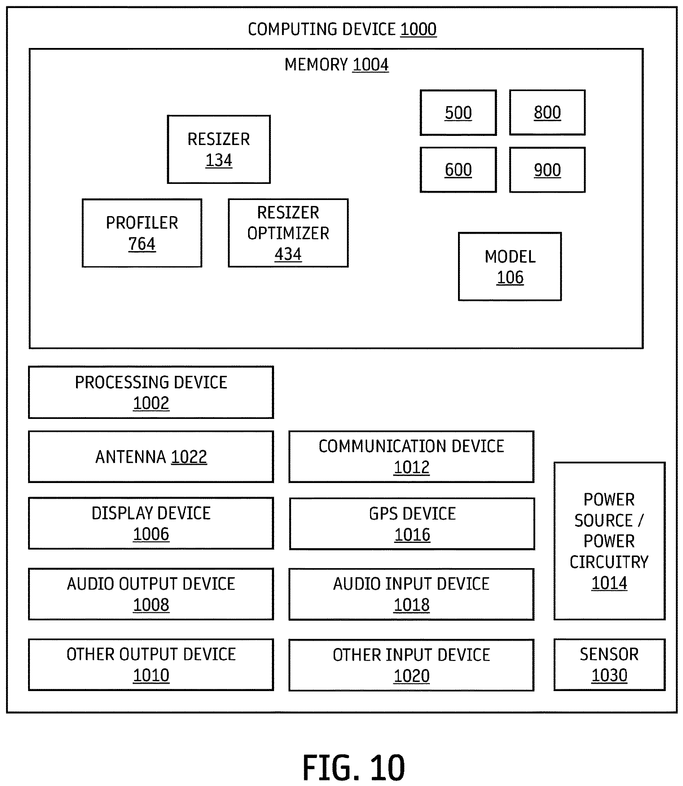

FIG. 10 is a block diagram of an apparatus or a system, e.g., an exemplary computing device 1000, according to some embodiments of the disclosure. One or more computing devices 1000 may be used to implement the functionalities described with the FIGS. and herein. A number of components are illustrated in FIG. 10 can be included in the computing device 1000, but any one or more of these components may be omitted or duplicated, as suitable for the application. In some embodiments, some or all of the components included in the computing device 1000 may be attached to one or more motherboards. In some embodiments, some or all of these components are fabricated onto a single system on a chip (SoC) die. Additionally, in various embodiments, the computing device 1000 may not include one or more of the components illustrated in FIG. 10, and the computing device 1000 may include interface circuitry for coupling to the one or more components. For example, the computing device 1000 may not include a display device 1006, and may include display device interface circuitry (e.g., a connector and driver circuitry) to which a display device 1006 may be coupled. In another set of examples, the computing device 1000 may not include an audio input device 1018 or an audio output device 1008 and may include audio input or output device interface circuitry (e.g., connectors and supporting circuitry) to which an audio input device 1018 or audio output device 1008 may be coupled.

The computing device 1000 may include a processing device 1002 (e.g., one or more processing devices, one or more of the same type of processing device, one or more of different types of processing device). The processing device 1002 may include processing circuitry or electronic circuitry that process electronic data from data storage elements (e.g., registers, memory, resistors, capacitors, quantum bit cells) to transform that electronic data into other electronic data that may be stored in registers and/or memory. Examples of processing device 1002 may include a CPU, a GPU, a quantum processor, a machine learning processor, an artificial intelligence processor, a neural network processor, an artificial intelligence accelerator, an application specific integrated circuit (ASIC), an analog signal processor, an analog computer, a microprocessor, a digital signal processor, a field programmable gate array (FPGA), a tensor processing unit (TPU), a data processing unit (DPU), etc.

The computing device 1000 may include a memory 1004, which may itself include one or more memory devices such as volatile memory (e.g., DRAM), nonvolatile memory (e.g., read-only memory (ROM)), high bandwidth memory (HBM), flash memory, solid state memory, and/or a hard drive. Memory 1004 includes one or more non-transitory computer-readable storage media. In some embodiments, memory 1004 may include memory that shares a die with the processing device 1002.

In some embodiments, memory 1004 includes one or more non-transitory computer-readable media storing instructions executable to perform operations described herein, such as operations illustrated in FIGS. 1-9. In some embodiments, memory 1004 includes one or more non-transitory computer-readable media storing instructions executable to perform one or more operations of methods described herein, such as method 300, method 500, method 600, method 800, and method 900. In some embodiments, memory 1004 includes one or more non-transitory computer-readable media storing instructions executable to perform one or more operations of resizer 134. In some embodiments, memory 1004 includes one or more non-transitory computer-readable media storing instructions executable to perform one or more operations of resizer optimizer 434. In some embodiments, memory 1004 includes one or more non-transitory computer-readable media storing instructions executable to perform one or more operations of profiler 764. The instructions stored in memory 1004 may be executed by processing device 1002.

In some embodiments, memory 1004 may store data, e.g., data structures, binary data, bits, metadata, files, blobs, etc., as described with the FIGS. and herein. Memory 1004 may include one or more non-transitory computer-readable media storing one or more of: data received and/or data generated by resizer 134. Memory 1004 may include one or more non-transitory computer-readable media storing one or more of: data received and/or data generated by resizer optimizer 434. Memory 1004 may include one or more non-transitory computer-readable media storing one or more of: data received and/or data generated by profiler 764. Other data not explicitly shown in FIG. 10 that may be stored in memory 1004 may include one or more of: one or more images 132, one or more training outputs 110, one or more images 162, known sample 740, and one or more inference outputs 140.

In some embodiments, memory 1004 may store one or more machine learning models (or parts thereof). An example of a machine learning model includes model 106. Memory 1004 may store training data for training a machine learning model. Memory 1004 may store instructions that perform operations associated with training a machine learning model. Memory 1004 may store input data, output data, intermediate outputs, intermediate inputs of one or more machine learning models. Memory 1004 may store one or more parameters used by the one or more machine learning models. Memory 1004 may store information that encodes how nodes or parts of the one or more machine learning models are connected with each other. Memory 1004 may store instructions (e.g., low-level machine code) to perform one or more operations of the one or more machine learning models. Memory 1004 may store a model definition that specifies one or more operations of a machine learning model.

In some embodiments, the computing device 1000 may include a communication device 1012 (e.g., one or more communication devices). For example, the communication device 1012 may be configured for managing wired and/or wireless communications for the transfer of data to and from the computing device 1000. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not. The communication device 1012 may implement any of a number of wireless standards or protocols, including but not limited to Institute for Electrical and Electronic Engineers (IEEE) standards including Wi-Fi (IEEE 802.10 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication device 1012 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication device 1012 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication device 1012 may operate in accordance with Code-division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 4G, 4G, 5G, and beyond. The communication device 1012 may operate in accordance with other wireless protocols in other embodiments. The computing device 1000 may include an antenna 1022 to facilitate wireless communications and/or to receive other wireless communications (such as radio frequency transmissions). Computing device 1000 may include receiver circuits and/or transmitter circuits. In some embodiments, the communication device 1012 may manage wired communications, such as electrical, optical, or any other suitable communication protocols (e.g., the Ethernet). As noted above, the communication device 1012 may include multiple communication chips. For instance, a first communication device 1012 may be dedicated to shorter-range wireless communications such as Wi-Fi or Bluetooth, and a second communication device 1012 may be dedicated to longer-range wireless communications such as global positioning system (GPS), EDGE, GPRS, CDMA, WiMAX, LTE, EV-DO, or others. In some embodiments, a first communication device 1012 may be dedicated to wireless communications, and a second communication device 1012 may be dedicated to wired communications.

The computing device 1000 may include power source / power circuitry 1014. The power source / power circuitry 10124 may include one or more energy storage devices (e.g., batteries or capacitors) and/or circuitry for coupling components of the computing device 1000 to an energy source separate from the computing device 1000 (e.g., DC power, AC power, etc.).

The computing device 1000 may include a display device 1006 (or corresponding interface circuitry, as discussed above). The display device 1006 may include any visual indicators, such as a heads-up display, a computer monitor, a projector, a touchscreen display, a liquid crystal display (LCD), a light-emitting diode display, or a flat panel display, for example.

The computing device 1000 may include an audio output device 1008 (or corresponding interface circuitry, as discussed above). The audio output device 1008 may include any device that generates an audible indicator, such as speakers, headsets, or earbuds, for example.

The computing device 1000 may include an audio input device 1018 (or corresponding interface circuitry, as discussed above). The audio input device 1018 may include any device that generates a signal representative of a sound, such as microphones, microphone arrays, or digital instruments (e.g., instruments having a musical instrument digital interface (MIDI) output).

The computing device 1000 may include a GPS device 1016 (or corresponding interface circuitry, as discussed above). The GPS device 1016 may be in communication with a satellite-based system and may receive a location of the computing device 1000, as known in the art.

The computing device 1000 may include a sensor 1030 (or one or more sensors). The computing device 1000 may include corresponding interface circuitry, as discussed above). Sensor 1030 may sense physical phenomenon and translate the physical phenomenon into electrical signals that can be processed by, e.g., processing device 1002. Examples of sensor 1030 may include: capacitive sensor, inductive sensor, resistive sensor, electromagnetic field sensor, light sensor, camera, imager, microphone, pressure sensor, temperature sensor, vibrational sensor, accelerometer, gyroscope, strain sensor, moisture sensor, humidity sensor, distance sensor, range sensor, time-of-flight sensor, pH sensor, particle sensor, air quality sensor, chemical sensor, gas sensor, biosensor, ultrasound sensor, a scanner, etc.

The computing device 1000 may include another output device 1010 (or corresponding interface circuitry, as discussed above). Examples of the other output device 1010 may include an audio codec, a video codec, a printer, a wired or wireless transmitter for providing information to other devices, haptic output device, gas output device, vibrational output device, lighting output device, home automation controller, or an additional storage device.

The computing device 1000 may include another input device 1020 (or corresponding interface circuitry, as discussed above). Examples of the other input device 1020 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing device 1000 may have any desired form factor, such as a handheld or mobile computer system (e.g., a cell phone, a smart phone, a mobile Internet device, a music player, a tablet computer, a laptop computer, a netbook computer, a personal digital assistant (PDA), an ultramobile personal computer, a remote control, wearable device, headgear, eyewear, footwear, electronic clothing, etc.), a desktop computer system, a server or other networked computing component, a printer, a scanner, a monitor, a set-top box, an entertainment control unit, a vehicle control unit, a digital camera, a digital video recorder, an Internet-of-Things device, or a wearable computer system. In some embodiments, the computing device 1000 may be any other electronic device that processes data.

## *Select examples*

Example 1 provides a method, including receiving downstream consumer information from a downstream process; determining resizing option based on the downstream consumer information; applying the resizing option to an image to generate a processed image; and storing the processed image, where the processed image is to be processed by the downstream process.

Example 2 provides the method of example 1, where the downstream consumer information includes a consumer intent.

Example 3 provides the method of example 2, where the downstream consumer information includes an identifier for a resizing algorithm.

Example 4 provides the method of example 3, where the downstream consumer information includes one or more parameters for the resizing algorithm.

Example 5 provides the method of example 2 or 3, where the downstream consumer information includes an order of operations.

Example 6 provides a method, including determining one or more resizing options; for a resizing option in the one or more resizing options: applying the resizing option to one or more test images to generate one or more resized test images; inputting the one or more resized test images into a model; and evaluating an inference quality of one or more outputs of the model; and determining an optimal resizing option based on the inference quality.

Example 7 provides the method of example 6, further including determining one or more sub-pixel shift options; for a sub-pixel shift option in the one or more sub-pixel shift options: determining an adjusted interpolation center based on the sub-pixel shift option; applying the optimal resizing option using the adjusted interpolation center to the one or more test images to generate one or more further resized test images; and evaluating a further inference quality of one or more further outputs of the model; and determining an optimal sub-pixel shift option based on the further inference quality.

Example 8 provides the method of example 7, further including applying the optimal resizing option using the optimal sub-pixel shift option to an image to generate a processed image; and storing the processed image, where the processed image is to be processed by the model.

Example 9 provides the method of any one of examples 6-8, where the one or more resizing options includes one or more resizing algorithms selected from: nearest neighbor, bilinear, bilinear Nyquist, bicubic, and Lanczos.

Example 10 provides the method of any one of examples 6-9, where the inference quality includes one or more of: accuracy metric, precision metric, recall metric, mean squared error, root mean squared error, mean absolute error, and R-squared error.

Example 11 provides the method of any one of examples 6-10, where determining the optimal resizing option includes determining whether the inference quality is greater than one or more determined inference qualities calculated for one or more other resizing options of the one or more resizing options.

Example 12 provides the method of any one of examples 7-10, where determining the one or more sub-pixel shift options includes determining one or more first sub-pixel shifts in a first direction according to pre-determined sub-pixel increments; determining one or more second sub-pixel shifts in a second direction according to the pre-determined sub-pixel increments; and determining one or more pairwise combinations of the one or more first sub-pixel shifts and the one or more second sub-pixel shifts.

Example 13 provides the method of any one of examples 7-12, where the further inference quality includes one or more of: accuracy metric, precision metric, recall metric, mean squared error, root mean squared error, mean absolute error, and R-squared error.

Example 14 provides the method of any one of examples 7-13, where determining the optimal sub-pixel shift option includes determining whether the further inference quality is a maximum further inference quality among one or more determined further inference qualities calculated for one or more other sub-pixel shift options in the one or more sub-pixel shift options.

Example 15 provides a method, including determining a filtering profile based on an original image and a resized image generated by a model; and determining a likely resizing option based on the filtering profile and a plurality of reference filtering profiles of a plurality of resizing options.

Example 16 provides the method of example 15, where determining the filtering profile includes determining an impact on frequency domain content based on a first frequency domain information of the original image and a second frequency domain information of the resized image.

Example 17 provides the method of example 16, where the impact quantifies a loss or preservation of frequency domain content.

Example 18 provides the method of any one of examples 15-17, where determining the filtering profile includes determining a blockiness level based on the resized image.

Example 19 provides the method of example 18, where determining the blockiness level includes performing Sobel edge detection on the resized image to determine one or more edges in the resized image; and determining the blockiness level based on the one or more edges.

Example 20 provides the method of any one of examples 15-19, where determining the filtering profile includes determining a ringing level based on the resized image.

Example 21 provides the method of example 20, where determining the ringing level includes performing Canny edge detection on the resized image to determine one or more further edges in the resized image; calculating one or more variances near the one or more further edges; and determining the ringing level based on the one or more variances.

Example 22 provides the method of any one of examples 15-21, further including applying the likely resizing option to the original image to generate a further resized image; and verifying the likely resizing option based on the resized image and the further resized image.

Example 23 provides the method of example 22, where verifying the likely resizing option includes calculating a structural similarity index between the resized image and the further resized image; and comparing the structural similarity index against a threshold.

Example 24 provides the method of any one of examples 15-23, further including performing Canny edge detection on the resized image to determine one or more edges in the resized image; applying the likely resizing option to the original image to generate a further resized image; performing the Canny edge detection on the further resized image to determine one or more further edges in the further resized image; and detecting a pixel shift between the resized image and the further resized image based on the one or more edges and the one or more further edges.

Example 25 provides the method of example 24, further including in response to detecting the pixel shift between the resized image and the further resized image, determining one or more sub-pixel shift options; for a sub-pixel shift option in the one or more sub-pixel shift options: determining an adjusted interpolation center based on the sub-pixel shift option; applying the likely resizing option using the adjusted interpolation center to the original image to generate a shifted resized image; and evaluating whether a further pixel shift between the shifted resized image and the resized image is present; and determining a likely sub-pixel shift option based on whether the further pixel shift is not present.

Example 26 provides the method of any one of examples 15-25, further including applying the likely resizing option to an image to generate a processed image; and storing the processed image, where the image is to be processed by the model.

Example 27 provides the method of example 26, further including applying the likely sub-pixel shift option to generate the processed image.

Example 28 provides the method of any one of examples 25-27, where determining the one or more sub-pixel shift options includes determining one or more first sub-pixel shifts in a first direction according to a pre-determined sub-pixel increment; determining one or more second sub-pixel shifts in a second direction according to the pre-determined sub-pixel increment; and determining one or more pairwise combinations of the one or more first sub-pixel shifts and the one or more second sub-pixel shifts.

Example 29 provides the method of any one of examples 25-28, where determining the likely sub-pixel shift option includes determining whether the pixel shift is smaller than one or more further evaluated pixels shifts calculated for one or more other sub-pixel shift options in the one or more sub-pixel shift options.

Example 30 provides the method of any one of examples 15-29, where the plurality of resizing options includes a plurality of resizing algorithms selected from: nearest neighbor, bilinear, bilinear Nyquist, bicubic, and Lanczos.

Example 31 provides one or more non-transitory computer-readable media storing instructions that, when executed by one or more processors, cause the one or more processors to: receive downstream consumer information from a downstream process; determine resizing option based on the downstream consumer information; apply the resizing option to an image to generate a processed image; and store the processed image, where the processed image is to be processed by the downstream process.

Example 32 provides the one or more non-transitory computer-readable media of example 31, where the downstream consumer information includes a consumer intent.

Example 33 provides the one or more non-transitory computer-readable media of example 32, where the downstream consumer information includes an identifier for a resizing algorithm.

Example 34 provides the one or more non-transitory computer-readable media of example 33, where the downstream consumer information includes one or more parameters for the resizing algorithm.

Example 35 provides the one or more non-transitory computer-readable media of example 32 or 33, where the downstream consumer information includes an order of operations.

Example 36 provides one or more non-transitory computer-readable media storing instructions that, when executed by one or more processors, cause the one or more processors to: determine one or more resizing options; for a resizing option in the one or more resizing options: apply the resizing option to one or more test images to generate one or more resized test images; input the one or more resized test images into a model; and evaluate an inference quality of one or more outputs of the model; and determine an optimal resizing option based on the inference quality.

Example 37 provides the one or more non-transitory computer-readable media of example 36, where the instructions further cause the one or more processors to: determine one or more sub-pixel shift options; for a sub-pixel shift option in the one or more sub-pixel shift options: determine an adjusted interpolation center based on the sub-pixel shift option; apply the optimal resizing option using the adjusted interpolation center to the one or more test images to generate one or more further resized test images; and evaluate a further inference quality of one or more further outputs of the model; and determine an optimal sub-pixel shift option based on the further inference quality.

Example 38 provides the one or more non-transitory computer-readable media of example 37, where the instructions further cause the one or more processors to: apply the optimal resizing option using the optimal sub-pixel shift option to an image to generate a processed image; and store the processed image, where the processed image is to be processed by the model.

Example 39 provides the one or more non-transitory computer-readable media of any one of examples 36-38, where the one or more resizing options includes one or more resizing algorithms selected from: nearest neighbor, bilinear, bilinear Nyquist, bicubic, and Lanczos.

Example 40 provides the one or more non-transitory computer-readable media of any one of examples 36-39, where the inference quality includes one or more of: accuracy metric, precision metric, recall metric, mean squared error, root mean squared error, mean absolute error, and R-squared error.

Example 41 provides the one or more non-transitory computer-readable media of any one of examples 36-40, where determining the optimal resizing option includes determining whether the inference quality is greater than one or more determined inference qualities calculated for one or more other resizing options of the one or more resizing options.

Example 42 provides the one or more non-transitory computer-readable media of any one of examples 37-40, where determining the one or more sub-pixel shift options includes determining one or more first sub-pixel shifts in a first direction according to pre-determined sub-pixel increments; determining one or more second sub-pixel shifts in a second direction according to the pre-determined sub-pixel increments; and determining one or more pairwise combinations of the one or more first sub-pixel shifts and the one or more second sub-pixel shifts.

Example 43 provides the one or more non-transitory computer-readable media of any one of examples 37-42, where the further inference quality includes one or more of: accuracy metric, precision metric, recall metric, mean squared error, root mean squared error, mean absolute error, and R-squared error.

Example 44 provides the one or more non-transitory computer-readable media of any one of examples 37-43, where determining the optimal sub-pixel shift option includes determining whether the further inference quality is a maximum further inference quality among one or more determined further inference qualities calculated for one or more other sub-pixel shift options in the one or more sub-pixel shift options.

Example 45 provides one or more non-transitory computer-readable media storing instructions that, when executed by one or more processors, cause the one or more processors to: determine a filtering profile based on an original image and a resized image generated by a model; and determine a likely resizing option based on the filtering profile and a plurality of reference filtering profiles of a plurality of resizing options.

Example 46 provides the one or more non-transitory computer-readable media of example 45, where determining the filtering profile includes determining an impact on frequency domain content based on a first frequency domain information of the original image and a second frequency domain information of the resized image.

Example 47 provides the one or more non-transitory computer-readable media of example 46, where the impact quantifies a loss or preservation of frequency domain content.

Example 48 provides the one or more non-transitory computer-readable media of any one of examples 45-47, where determining the filtering profile includes determining a blockiness level based on the resized image.

Example 49 provides the one or more non-transitory computer-readable media of example 48, where determining the blockiness level includes performing Sobel edge detection on the resized image to determine one or more edges in the resized image; and determining the blockiness level based on the one or more edges.

Example 50 provides the one or more non-transitory computer-readable media of any one of examples 45-49, where determining the filtering profile includes determining a ringing level based on the resized image.

Example 51 provides the one or more non-transitory computer-readable media of example 50, where determining the ringing level includes performing Canny edge detection on the resized image to determine one or more further edges in the resized image; calculating one or more variances near the one or more further edges; and determining the ringing level based on the one or more variances.

Example 52 provides the one or more non-transitory computer-readable media of any one of examples 45-51, where the instructions further cause the one or more processors to: apply the likely resizing option to the original image to generate a further resized image; and verify the likely resizing option based on the resized image and the further resized image.

Example 53 provides the one or more non-transitory computer-readable media of example 52, where verifying the likely resizing option includes calculating a structural similarity index between the resized image and the further resized image; and comparing the structural similarity index against a threshold.

Example 54 provides the one or more non-transitory computer-readable media of any one of examples 45-53, where the instructions further cause the one or more processors to: perform Canny edge detection on the resized image to determine one or more edges in the resized image; apply the likely resizing option to the original image to generate a further resized image; perform the Canny edge detection on the further resized image to determine one or more further edges in the further resized image; and detect a pixel shift between the resized image and the further resized image based on the one or more edges and the one or more further edges.

Example 55 provides the one or more non-transitory computer-readable media of example 54, where the instructions further cause the one or more processors to: in response to detecting the pixel shift between the resized image and the further resized image, determine one or more sub-pixel shift options; for a sub-pixel shift option in the one or more sub-pixel shift options: determine an adjusted interpolation center based on the sub-pixel shift option; apply the likely resizing option using the adjusted interpolation center to the original image to generate a shifted resized image; and evaluate whether a further pixel shift between the shifted resized image and the resized image is present; and determine a likely sub-pixel shift option based on whether the further pixel shift is not present.

Example 56 provides the one or more non-transitory computer-readable media of any one of examples 45-55, where the instructions further cause the one or more processors to: apply the likely resizing option to an image to generate a processed image; and store the processed image, where the image is to be processed by the model.

Example 57 provides the one or more non-transitory computer-readable media of example 56, where the instructions further cause the one or more processors to: apply the likely sub-pixel shift option to generate the processed image.

Example 58 provides the one or more non-transitory computer-readable media of any one of examples 55-57, where determining the one or more sub-pixel shift options includes determining one or more first sub-pixel shifts in a first direction according to a pre-determined sub-pixel increment; determining one or more second sub-pixel shifts in a second direction according to the pre-determined sub-pixel increment; and determining one or more pairwise combinations of the one or more first sub-pixel shifts and the one or more second sub-pixel shifts.

Example 59 provides the one or more non-transitory computer-readable media of any one of examples 55-58, where determining the likely sub-pixel shift option includes determining whether the pixel shift is smaller than one or more further evaluated pixels shifts calculated for one or more other sub-pixel shift options in the one or more sub-pixel shift options.

Example 60 provides the one or more non-transitory computer-readable media of any one of examples 45-59, where the plurality of resizing options includes a plurality of resizing algorithms selected from: nearest neighbor, bilinear, bilinear Nyquist, bicubic, and Lanczos.

Example 61 provides an apparatus, including one or more processors; and one or more non-transitory computer-readable media storing instructions that, when executed by the one or more processors, cause the one or more processors to: receive downstream consumer information from a downstream process; determine resizing option based on the downstream consumer information; apply the resizing option to an image to generate a processed image; and store the processed image, where the processed image is to be processed by the downstream process.

Example 62 provides the apparatus of example 61, where the downstream consumer information includes a consumer intent.

Example 63 provides the apparatus of example 62, where the downstream consumer information includes an identifier for a resizing algorithm.

Example 64 provides the apparatus of example 63, where the downstream consumer information includes one or more parameters for the resizing algorithm.

Example 65 provides the apparatus of example 62 or 63, where the downstream consumer information includes an order of operations.

Example 66 provides an apparatus, including one or more processors; and one or more non-transitory computer-readable media storing instructions that, when executed by the one or more processors, cause the one or more processors to: determine one or more resizing options; for a resizing option in the one or more resizing options: apply the resizing option to one or more test images to generate one or more resized test images; input the one or more resized test images into a model; and evaluate an inference quality of one or more outputs of the model; and determine an optimal resizing option based on the inference quality.

Example 67 provides the apparatus of example 66, where the instructions further cause the one or more processors to: determine one or more sub-pixel shift options; for a sub-pixel shift option in the one or more sub-pixel shift options: determine an adjusted interpolation center based on the sub-pixel shift option; apply the optimal resizing option using the adjusted interpolation center to the one or more test images to generate one or more further resized test images; and evaluate a further inference quality of one or more further outputs of the model; and determine an optimal sub-pixel shift option based on the further inference quality.

Example 68 provides the apparatus of example 67, where the instructions further cause the one or more processors to: apply the optimal resizing option using the optimal sub-pixel shift option to an image to generate a processed image; and store the processed image, where the processed image is to be processed by the model.

Example 69 provides the apparatus of any one of examples 66-68, where the one or more resizing options includes one or more resizing algorithms selected from: nearest neighbor, bilinear, bilinear Nyquist, bicubic, and Lanczos.

Example 70 provides the apparatus of any one of examples 66-69, where the inference quality includes one or more of: accuracy metric, precision metric, recall metric, mean squared error, root mean squared error, mean absolute error, and R-squared error.

Example 71 provides the apparatus of any one of examples 66-70, where determining the optimal resizing option includes determining whether the inference quality is greater than one or more determined inference qualities calculated for one or more other resizing options of the one or more resizing options.

Example 72 provides the apparatus of any one of examples 67-70, where determining the one or more sub-pixel shift options includes determining one or more first sub-pixel shifts in a first direction according to pre-determined sub-pixel increments; determining one or more second sub-pixel shifts in a second direction according to the pre-determined sub-pixel increments; and determining one or more pairwise combinations of the one or more first sub-pixel shifts and the one or more second sub-pixel shifts.

Example 73 provides the apparatus of any one of examples 67-72, where the further inference quality includes one or more of: accuracy metric, precision metric, recall metric, mean squared error, root mean squared error, mean absolute error, and R-squared error.

Example 74 provides the apparatus of any one of examples 67-73, where determining the optimal sub-pixel shift option includes determining whether the further inference quality is a maximum further inference quality among one or more determined further inference qualities calculated for one or more other sub-pixel shift options in the one or more sub-pixel shift options.

Example 75 provides an apparatus, including one or more processors; and one or more non-transitory computer-readable media storing instructions that, when executed by the one or more processors, cause the one or more processors to: determine a filtering profile based on an original image and a resized image generated by a model; and determine a likely resizing option based on the filtering profile and a plurality of reference filtering profiles of a plurality of resizing options.

Example 76 provides the apparatus of example 75, where determining the filtering profile includes determining an impact on frequency domain content based on a first frequency domain information of the original image and a second frequency domain information of the resized image.

Example 77 provides the apparatus of example 76, where the impact quantifies a loss or preservation of frequency domain content.

Example 78 provides the apparatus of any one of examples 75-77, where determining the filtering profile includes determining a blockiness level based on the resized image.

Example 79 provides the apparatus of example 78, where determining the blockiness level includes performing Sobel edge detection on the resized image to determine one or more edges in the resized image; and determining the blockiness level based on the one or more edges.

Example 80 provides the apparatus of any one of examples 75-79, where determining the filtering profile includes determining a ringing level based on the resized image.

Example 81 provides the apparatus of example 80, where determining the ringing level includes performing Canny edge detection on the resized image to determine one or more further edges in the resized image; calculating one or more variances near the one or more further edges; and determining the ringing level based on the one or more variances.

Example 82 provides the apparatus of any one of examples 75-81, where the instructions further cause the one or more processors to: apply the likely resizing option to the original image to generate a further resized image; and verify the likely resizing option based on the resized image and the further resized image.

Example 83 provides the apparatus of example 82, where verifying the likely resizing option includes calculating a structural similarity index between the resized image and the further resized image; and comparing the structural similarity index against a threshold.

Example 84 provides the apparatus of any one of examples 75-83, where the instructions further cause the one or more processors to: perform Canny edge detection on the resized image to determine one or more edges in the resized image; apply the likely resizing option to the original image to generate a further resized image; perform the Canny edge detection on the further resized image to determine one or more further edges in the further resized image; and detect a pixel shift between the resized image and the further resized image based on the one or more edges and the one or more further edges.

Example 85 provides the apparatus of example 84, where the instructions further cause the one or more processors to: in response to detecting the pixel shift between the resized image and the further resized image, determine one or more sub-pixel shift options; for a sub-pixel shift option in the one or more sub-pixel shift options: determine an adjusted interpolation center based on the sub-pixel shift option; apply the likely resizing option using the adjusted interpolation center to the original image to generate a shifted resized image; and evaluate whether a further pixel shift between the shifted resized image and the resized image is present; and determine a likely sub-pixel shift option based on whether the further pixel shift is not present.

Example 86 provides the apparatus of any one of examples 75-85, where the instructions further cause the one or more processors to: apply the likely resizing option to an image to generate a processed image; and store the processed image, where the image is to be processed by the model.

Example 87 provides the apparatus of example 86, where the instructions further cause the one or more processors to: apply the likely sub-pixel shift option to generate the processed image.

Example 88 provides the apparatus of any one of examples 85-87, where determining the one or more sub-pixel shift options includes determining one or more first sub-pixel shifts in a first direction according to a pre-determined sub-pixel increment; determining one or more second sub-pixel shifts in a second direction according to the pre-determined sub-pixel increment; and determining one or more pairwise combinations of the one or more first sub-pixel shifts and the one or more second sub-pixel shifts.

Example 89 provides the apparatus of any one of examples 85-88, where determining the likely sub-pixel shift option includes determining whether the pixel shift is smaller than one or more further evaluated pixels shifts calculated for one or more other sub-pixel shift options in the one or more sub-pixel shift options.

Example 90 provides the apparatus of any one of examples 75-89, where the plurality of resizing options includes a plurality of resizing algorithms selected from: nearest neighbor, bilinear, bilinear Nyquist, bicubic, and Lanczos.

Example A provides an apparatus comprising means to carry out or means for carrying out any one of the methods provided in examples 1-30 and methods/processes described herein.

Example B provides a resizer as described with FIGS. 2-3.

Example C provides a system comprising a resizer and a resizer optimizer as described with FIGS. 4-6.

Example D provides a system comprising a resizer and a profiler as described with FIGS. 7-9.

*Variations and other notes*

Although the operations of the example method shown in and described with reference to FIGS. 1-9 are illustrated as occurring once each and in a particular order, it will be recognized that some operations may be performed in any suitable order and repeated as desired. Furthermore, the operations illustrated in FIGS. 1-9 or other FIGS. may be combined or may include more or fewer details than described.

The various implementations described herein may refer to artificial intelligence, machine learning, and deep learning. Deep learning may be a subset of machine learning. Machine learning may be a subset of artificial intelligence. In cases where a deep learning model is mentioned, if suitable for a particular application, a machine learning model may be used instead. In cases where a deep learning model is mentioned, if suitable for a particular application, a digital signal processing system may be used instead.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

For purposes of explanation, specific numbers, materials and configurations are set forth in order to provide a thorough understanding of the illustrative implementations. However, it will be apparent to one skilled in the art that the present disclosure may be practiced without the specific details and/or that the present disclosure may be practiced with only some of the described aspects. In other instances, well known features are omitted or simplified in order not to obscure the illustrative implementations.

Further, references are made to the accompanying drawings that form a part hereof, and in which are shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the disclosed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A or B" or the phrase "A and/or B" means (A), (B), or (A and B). For the purposes of the present disclosure, the phrase "A, B, or C" or the phrase "A, B, and/or C" means (A), (B), (C), (A and B), (A and C), (B and C), or (A, B, and C). The term "between," when used with reference to measurement ranges, is inclusive of the ends of the measurement ranges.

For the purposes of the present disclosure, "A is less than or equal to a first threshold" is equivalent to "A is less than a second threshold" provided that the first threshold and the second thresholds are set in a manner so that both statements result in the same logical outcome for any value of A. For the purposes of the present disclosure, "B is greater than a first threshold" is equivalent to "B is greater than or equal to a second threshold" provided that the first threshold and the second thresholds are set in a manner so that both statements result in the same logical outcome for any value of B.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value as described herein or as known in the art. Similarly, terms indicating orientation of various elements, e.g., "coplanar," "perpendicular," "orthogonal," "parallel," or any other angle between the elements, generally refer to being within +/- 5-20% of a target value as described herein or as known in the art.

In addition, the terms "comprise," "comprising," "include," "including," "have," "having" or any other variation thereof, are intended to cover a non-exclusive inclusion. For example, a method, process, or device, that comprises a list of elements is not necessarily limited to only those elements but may include other elements not expressly listed or inherent to such method, process, or device. Also, the term "or" refers to an inclusive "or" and not to an exclusive "or."

The systems, methods and devices of this disclosure each have several innovative aspects, no single one of which is solely responsible for all desirable attributes disclosed herein. Details of one or more implementations of the subject matter described in this specification are set forth in the description and the accompanying drawings.

**Claims**

**1.** A method, comprising:

determining one or more resizing options;

for a resizing option in the one or more resizing options:

applying the resizing option to one or more test images to generate one or more resized test images;
inputting the one or more resized test images into a model; and
evaluating an inference quality of one or more outputs of the model; and determining an optimal resizing option based on the inference quality.

2. The method of claim 1, further comprising:

determining one or more sub-pixel shift options;
for a sub-pixel shift option in the one or more sub-pixel shift options:

determining an adjusted interpolation center based on the sub-pixel shift option;
applying the optimal resizing option using the adjusted interpolation center to the one or more test images to generate one or more further resized test images; and
evaluating a further inference quality of one or more further outputs of the model; and

determining an optimal sub-pixel shift option based on the further inference quality.

3. The method of claim 2, further comprising:

applying the optimal resizing option using the optimal sub-pixel shift option to an image to generate a processed image; and
storing the processed image, wherein the processed image is to be processed by the model.

4. The method of any one of claims 1-3, wherein the one or more resizing options comprises one or more resizing algorithms selected from: nearest neighbor, bilinear, bilinear Nyquist, bicubic, and Lanczos.

5. The method of any one of claims 1-4, wherein the inference quality comprises one or more of: accuracy metric, precision metric, recall metric, mean squared error, root mean squared error, mean absolute error, and R-squared error.

6. The method of any one of claims 1-5, wherein determining the optimal resizing option comprises:
determining whether the inference quality is greater than one or more determined inference qualities calculated for one or more other resizing options of the one or more resizing options.

7. The method of any one of claims 2-5, wherein determining the one or more sub-pixel shift options comprises:

determining one or more first sub-pixel shifts in a first direction according to pre-determined sub-pixel increments;
determining one or more second sub-pixel shifts in a second direction according to the pre-determined sub-pixel increments; and
determining one or more pairwise combinations of the one or more first sub-pixel shifts and the one or more second sub-pixel shifts.

8. The method of any one of claims 2-7, wherein the further inference quality comprises one or more of: accuracy metric, precision metric, recall metric, mean squared error, root mean squared error, mean absolute error, and R-squared error.

9. The method of any one of claims 2-8, wherein determining the optimal sub-pixel shift option comprises:
determining whether the further inference quality is a maximum further inference quality among one or more determined further inference qualities calculated for one or more other sub-pixel shift options in the one or more sub-pixel shift options.

10. One or more non-transitory computer-readable media storing instructions that, when executed by one or more processors, cause the one or more processors to perform a method according to any one of claims 1-9.

11. An apparatus, comprising means to perform a method according to any one of claims 1-9.

FIG. 1

FIG. 2

300

```
┌─────────────────────────────────────┐
│   RECEIVE DOWNSTREAM PROCESS          │
│       INFORMATION 302                 │
└─────────────────────────────────────┘
                  │
                  ▼
┌─────────────────────────────────────┐
│   DETERMINE RESIZING OPTION BASED ON  │
│   DOWNSTREAM PROCESS INFORMATION 304  │
└─────────────────────────────────────┘
                  │
                  ▼
┌─────────────────────────────────────┐
│   APPLY THE RESIZING OPTION TO IMAGE 306 │
└─────────────────────────────────────┘
                  │
                  ▼
┌─────────────────────────────────────┐
│      STORE PROCESSED IMAGE 308        │
└─────────────────────────────────────┘
```

# FIG. 3

FIG. 4

500

DETERMINE RESIZING OPTIONS 502

FOR EACH RESIZING OPTION

APPLY A RESIZING OPTION TO ONE OR MORE TEST IMAGES 504

INPUT ONE OR MORE RESIZED TEST IMAGES INTO A MODEL 506

EVALUATE AN INFERENCE QUALITY OF ONE OR MORE OUTPUTS OF THE MODEL 508

DETERMINE AN OPTIMAL RESIZING OPTION WITH MAXIMUM INFERENCE QUALITY 510

A

FIG. 5

600

( A )

DETERMINE SUB-PIXEL SHIFT OPTIONS 602

FOR EACH SUB-PIXEL SHIFT OPTION

DETERMINE AN ADJUSTED INTERPOLATION CENTER BASED ON A SUB-PIXEL SHIFT OPTION 604

APPLY THE OPTIMAL RESIZING OPTION WITH THE ADJUSTED INTERPOLATION CENTER 606

INPUT IMAGE TEST SET INTO MODEL 608

EVALUATE INFERENCE QUALITY 610

DETERMINE AN OPTIMAL SUB-PIXEL SHIFT OPTION WITH MAXIMUM INFERENCE QUALITY 612

APPLY THE OPTIMAL RESIZING OPTION AND THE OPTIMAL SUB-PIXEL SHIFT OPTION TO IMAGE 614

STORE PROCESSED IMAGE 616

# FIG. 6

FIG. 7

800

DETERMINE A FILTERING PROFILE 802

| DETERMINE IMPACT ON FREQUENCY DOMAIN CONTENT 804 | DETERMINE BLOCKINESS LEVEL 806 | DETERMINE RINGING LEVEL 808 | ... |

DETERMINE A LIKELY RESIZING OPTION BASED ON THE IMPACT, THE BLOCKINESS LEVEL, AND THE RINGING LEVEL 810

APPLY THE LIKELY RESIZING OPTION 812

VERIFY 814

( B )

FIG. 8

900

B

COMPARE EDGES TO DETECT PIXEL SHIFT
902

FOR EACH SUB-PIXEL SHIFT OPTION

ADJUST INTERPOLATION CENTER BASED ON
A SUB-PIXEL SHIFT OPTION 904

APPLY LIKELY RESIZING OPTION USING THE
ADJUSTED INTERPOLATION CENTER 906

DETERMINE WHETHER PIXEL SHIFT IS
PRESENT 908

DETERMINE LIKELY SUB-PIXEL SHIFT
OPTION WITH NO PIXEL SHIFT 910

APPLY THE LIKELY RESIZING OPTION AND
THE SUB-PIXEL SHIFT OPTION TO IMAGE
912

STORE PROCESSED IMAGE 914

FIG. 9

COMPUTING DEVICE 1000

MEMORY 1004

500    800

600    900

RESIZER
134

PROFILER
764

RESIZER
OPTIMIZER
434

MODEL
106

PROCESSING DEVICE
1002

ANTENNA 1022

COMMUNICATION DEVICE
1012

DISPLAY DEVICE
1006

GPS DEVICE
1016

POWER
SOURCE /
POWER
CIRCUITRY
1014

AUDIO OUTPUT DEVICE
1008

AUDIO INPUT DEVICE
1018

OTHER OUTPUT DEVICE
1010

OTHER INPUT DEVICE
1020

SENSOR
1030

FIG. 10

Europäisches
Patentamt
European
Patent Office
Office européen
des brevets

## EUROPEAN SEARCH REPORT

**Application Number**

EP 25 18 8640

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TANG FAN ET AL: "Image Retargetability", IEEE TRANSACTIONS ON MULTIMEDIA, IEEE, USA, vol. 22, no. 3, 31 July 2019 (2019-07-31), pages 641-654, XP011773755, ISSN: 1520-9210, DOI: 10.1109/TMM.2019.2932620 [retrieved on 2020-02-20] | 1,5,6, 10,11 | INV. G06T3/40 |
| A | * abstract * <br> * page 641, paragraph I - page 642 * <br> * page 643, paragraph III - page 652, paragraph VII * | 2-4,7-9 | |
| X | LI YUWEI ET AL: "A Content-Aware Image Retargeting Quality Assessment Method Using Foreground and Global Measurement", IEEE ACCESS, vol. 7, 5 July 2019 (2019-07-05), pages 91912-91923, XP011736395, DOI: 10.1109/ACCESS.2019.2927032 [retrieved on 2019-07-22] | 1,5,6, 10,11 | |
| A | * abstract * <br> * page 91914, paragraph III - page 91919, paragraph V.A * | 2-4,7-9 | TECHNICAL FIELDS SEARCHED (IPC) <br><br> G06T |
| X | KHARSA RUBA ET AL: "Image Retargeting Techniques Identification Using Supervised Deep Learning", 2023 FOURTH INTERNATIONAL CONFERENCE ON INTELLIGENT DATA SCIENCE TECHNOLOGIES AND APPLICATIONS (IDSTA), IEEE, 24 October 2023 (2023-10-24), pages 15-20, XP034472491, DOI: 10.1109/IDSTA58916.2023.10317851 [retrieved on 2023-11-21] * abstract * | 1,6,10, 11 | |

The present search report has been drawn up for all claims

| Place of search | Date of completion of the search | Examiner |
|---|---|---|
| Munich | 12 December 2025 | Zamuner, Umberto |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)